# EUROPEAN PATENT APPLICATION

(11) **EP 1 721 773 A2**
(43) Date of publication of application: **15.11.2006**
(21) Application number: 06012304.9
(22) Date of filing: 27.06.2003
(51) Int. Cl.: B60K 8/00, B60K 1/04

(54) **Fuel cell vehicle**

(30) Priority: 27.08.2002 JP 2002246210
(62) Divisional of application: 03736292.8
(71) Applicant: TOYOTA JIDOSHA KABUSHIKI KAISHA, Toyota-shi, Aichi-ken 471-8571 (JP)
(72) Inventor: Yamashita, Masayoshi, Toyota-shi Aichi 471-8571 (JP)
(74) Representative: Kuhnen & Wacker

(57) **Abstract**

In a fuel cell vehicle 10, a left wheel motor 11 and a right wheel motor 12 are respectively provided as in-wheel motors to rotate a left front wheel FRW and a right front wheel FLW. Compared with a common motor used to rotate both the left front wheel and the right front wheel, the wheel motors 11 and 12 have smaller dimensions to define a relatively large space between the two motors 11 and 12 (inter-motor space S) in a front vehicle chamber 61. The fuel cells 20 are placed with some margins in this sufficiently large inter-motor space S.

## Description

### Technical Field

The present invention relates to a fuel cell vehicle with fuel cells mounted thereon.

### Background Art

Fuel cell vehicles having various arrangements of fuel cells without narrowing a passenger compartment have been proposed. For example, a fuel cell vehicle disclosed in Japanese Patent Laid-Open Gazette No. 2001-253248 has a drive motor and fuel cells arranged in a front vehicle chamber. The drive motor is located about the center of an axle spanned between left and right front wheels. The fuel cells are arranged close to the drive motor. Fuel tanks for supplying a fuel gas (hydrogen) to the fuel cells are also arranged close to the fuel cells.

In this prior art fuel cell vehicle disclosed in the above cited reference, only one drive motor is used to rotate both the left and the right wheels. The drive motor accordingly has relatively large dimensions to narrow the space for the fuel cells. The arrangement of the fuel tanks close to the fuel cells undesirably restricts the layout.

The object of the invention is thus to eliminate the drawbacks of the prior art and to provide a fuel cell vehicle with fuel cells placed with some margins in a relatively large space between left and right wheels. The object of the invention is also to provide a fuel cell vehicle with vehicle equipment arranged in a favorable layout via sufficient intervals.

### Disclosure of the Invention

In order to attain at least part of the above and the other related objects, the present invention is directed to a first fuel cell vehicle including: a left wheel motor and a right wheel motor that are located respectively close to at least one of left wheels and close to at least one of right wheels on a front side and a rear side of the fuel cell vehicle; and fuel cells that are placed in a space formed between the left and right wheels on either of the front side and the rear side of the fuel cell vehicle.

In the first fuel cell vehicle of the invention, the left wheel motor and the right wheel motor are located close to the left and right wheels on the front side of the vehicle, close to the left and right wheels on the rear side of the vehicle, or close to the left and right wheels on both the front side and the rear side of the vehicle. The fuel cells are arranged in the space formed between the left and right wheels on the front side of the vehicle or in the space formed between the left and right wheels on the rear side of the vehicle. In the arrangement of the fuel cells in the space formed between wheels without the nearby wheel motors, the fuel cells are placed with some margins in this sufficiently large space. In the arrangement of the fuel cells in the space formed between the wheels with the nearby wheel motors, on the other hand, the left wheel motor and the right wheel motor respectively driven to rotate the left wheel and the right wheel have smaller dimensions, compared with a common motor driven to rotate both the left wheel and the right wheel. Such small dimensions ensure a relatively large space between wheels, in which the fuel cells are placed with some margins. The fuel cells may be arranged to be wholly received in the space formed between the wheels or to be partly extended to the space formed between the wheels.

The 'fuel cells' may be arranged to supply electric power to the left wheel motor and the right wheel motor or to supply electric power to other vehicle equipment (for example, air conditioning equipment, audio video equipment, a navigational device, and a lighting device).

In the fuel cell vehicle of the invention, the fuel cells may be placed in an inter-motor space formed between the left wheel motor and the right wheel motor. The left wheel motor is arranged close to the left wheel, whereas the right wheel motor is arranged close to the right wheel. There is accordingly a space between the two motors (inter-motor space). The left wheel motor and the right wheel motor respectively driven to rotate the left wheel and the right wheel have smaller dimensions, compared with a common motor driven to rotate both the left wheel and the right wheel. Such small dimensions ensure a relatively large inter-motor space, in which the fuel cells are placed with some margins. The fuel cells may be arranged to be wholly received in the inter-motor space or to be partly extended to the inter-motor space.

In the fuel cell vehicle of the invention, the fuel cells may be placed on the front side of the fuel cell vehicle. The arrangement of the fuel cells on the front side of the vehicle is convenient for replacement or repair.

In the fuel cell vehicle of the invention, the left wheel motor and the right wheel motor may be both in-wheel motors. This arrangement ensures a sufficiently large inter-motor space.

In one preferable embodiment of the fuel cell vehicle of the invention, at least part of auxiliary machinery of the fuel cells is placed in a neighborhood of the fuel cells. This arrangement desirably simplifies the wiring and piping connections with the fuel cells, compared with separate arrangement of at least part of the auxiliary machinery from the fuel cells. The 'auxiliary machinery of the fuel cells' represent various devices and equipment required for the operations of the fuel cells and include an oxidizing gas supply device to supply an oxidizing gas to the fuel cells, a fuel gas supply device to supply a fuel gas to the fuel cells, mass flow controllers to regulate the pressures and the flow rates of the oxidizing gas and the fuel gas supplied to the fuel cells, gas circulation devices to recirculate non-reacted oxidizing gas and non-reacted fuel gas, which are discharged from the fuel cells, to the fuel cells, and a cooling water circulation device to circulate cooling water through the fuel cells for cooling the fuel cells down.

The fuel cell vehicle of the invention may further include a secondary battery that is located in a lower space under a seat in a passenger compartment of the fuel cell vehicle. The lower space of the seat is not occupied by the fuel cells and can thus receive the secondary battery therein. The secondary battery may be arranged inside a vehicle chamber (on the vehicle floor) or outside the vehicle chamber (below the vehicle floor). It is preferable that the secondary battery is positioned by underfloor reinforcements, which are extended in a longitudinal direction of the fuel cell vehicle, and is oriented to have its longitudinal axis parallel to a side-to-side horizontal direction of the fuel cell vehicle. This arrangement utilizes the underfloor reinforcements generally provided in the vehicle to position the secondary battery, thus desirably reducing the number of fixtures to fasten the secondary battery and enhancing the rigidity of the vehicle against side collisions. The 'secondary battery' may be arranged to supply electric power to the left wheel motor and the right wheel motor or to supply electric power to other vehicle equipment (for example, air conditioning equipment, audio video equipment, a navigational device, and a lighting device). The secondary battery may be replaced with a chargeable and dischargeable accumulator, for example, a capacitor.

The fuel cell vehicle of the invention may further include a fuel gas supply source that is located in a lower space under a seat in a passenger compartment of the fuel cell vehicle and supplies a fuel gas to the fuel cells. The lower space of the seat is not occupied by the fuel cells and can thus receive the fuel gas supply source therein. The 'fuel gas supply source' may be any device that is capable of supplying a fuel gas subjected to electrochemical reaction of the fuel cells, for example, a container for storage of the fuel gas or a generator for generating the fuel gas from a certain material.

The present invention is also directed to a second fuel cell vehicle including: fuel cells that are located in a front vehicle chamber; a secondary battery that is located in a lower space under a front seat in a passenger compartment of the fuel cell vehicle; and a fuel gas supply source that is located in a lower space under a rear seat in the passenger compartment and supplies a fuel gas to the fuel cells.

In the second fuel cell vehicle of the invention, the fuel cells, the secondary battery, and the fuel gas supply source as vehicle equipment are arranged in this order via intervals from the front to the rear of the vehicle. This structure ensures the favorable layout of the vehicle equipment via sufficient intervals. The fuel cells and the secondary battery of the high-voltage power source system are sufficiently separated from the fuel gas supply source. The fuel cells and the secondary battery may be identical with the fuel cells and the secondary battery included in the first fuel cell vehicle of the invention. This ensures the additional functions and effects of the first fuel cell vehicle. In a vehicle with three rows of seats aligned in the longitudinal axis of the vehicle, when a seat in a front row is defined as a front seat, a seat in either a middle row or a rear row is set to a rear seat. When the seat in the middle row is defined as the front seat, on the other hand, the seat in the rear row is set to the rear seat. The secondary battery may be replaced by a chargeable and dischargeable accumulator, for example, a capacitor.

### Brief Description of the Drawings

Fig. 1 is a plan view schematically illustrating the configuration of a fuel cell vehicle in one embodiment of the invention; Fig. 2 is a side view schematically illustrating the configuration of the fuel cell vehicle of the embodiment;
Fig. 3 is a block diagram showing the internal structure of the fuel cell vehicle of the embodiment; Fig. 4 shows an arrangement of a secondary battery; and Fig. 5 shows another arrangement of the secondary battery.

### Best Modes of Carrying Out the Invention

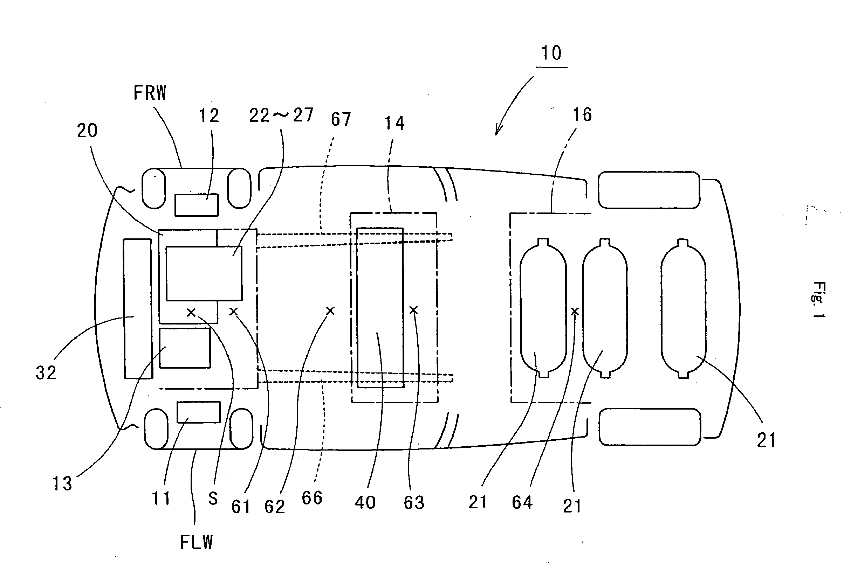

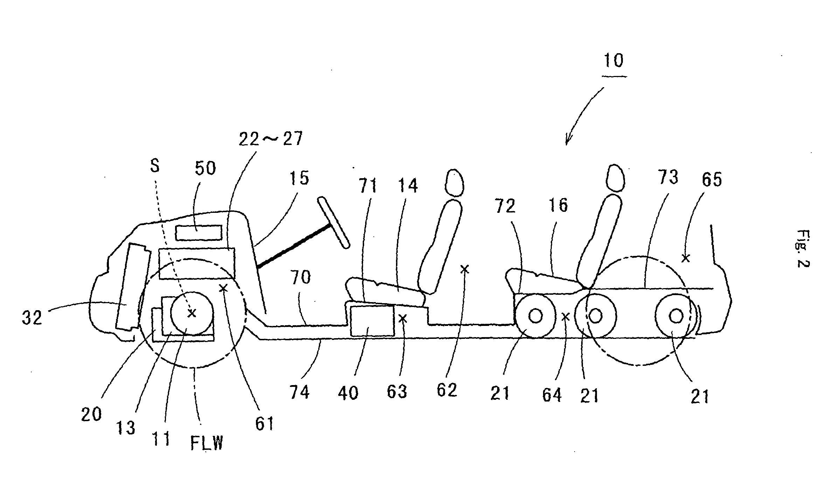

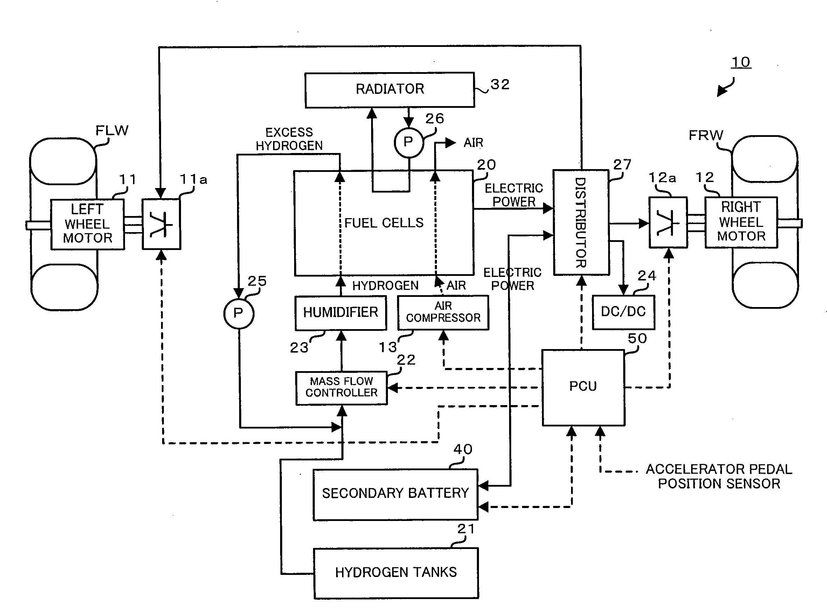

In order to clarify the objects, features, aspects, and advantages of the present invention, one mode of carrying out the invention is described below with reference to the accompanied drawings. Fig. 1 is a plan view schematically illustrating the configuration of a fuel cell vehicle in one embodiment of the invention; Fig. 2 is a side view schematically illustrating the configuration of the fuel cell vehicle of the embodiment; Fig. 3 is a block diagram showing the internal structure of the fuel cell vehicle of the embodiment.

The fuel cell vehicle 10 of this embodiment has a monocoque chassis construction of integrated chassis frame and body and mainly includes a left wheel motor 11, a right wheel motor 12, a front seat 14, a rear seat 16, fuel cells 20, a secondary battery 40, hydrogen tanks 21, and a power control unit (PCU) 50. The monocoque chassis construction may be replaced by a frame construction. The PCU 50 is omitted from the illustration of Fig. 2.

The left wheel motor 11 is an in-wheel motor built inside the wheel structure of a left front wheel FLW and functions to rotate an axle of the left front wheel FLW. The right wheel motor 12 is an in-wheel motor built inside the wheel structure of a right front wheel FRW and functions to rotate an axle of the right front wheel FRW. The left wheel motor 11 and the right wheel motor 12 are separately arranged to define a relatively wide inter-motor space S therebetween in a front vehicle chamber 61, which is parted from a passenger compartment 62 by a dash panel. The inter-motor space S is a virtual cavity space defined by connecting a contour shape of the left wheel motor 11 seen from a side-to-side horizontal direction of the vehicle under the setting of the left front wheel FLW in a traveling direction with a contour shape of the right wheel motor 12 seen from the side-to-side horizontal direction of the vehicle under the setting of the right front wheel FRW in the traveling direction.

A DC power output from the fuel cells 20 or the secondary battery 40 goes through a distributor 27 and is converted into three-phase alternating currents by inverters 11a and 12a to be supplied to the respective motors 11 and 12 as shown in Fig. 3. In response to the supply of the electric power, both the motors 11 and 12 generate rotational driving forces, which are respectively transmitted to the axles of the left front wheel FLW and the right front wheel FRW to be used as the power of driving the fuel cell vehicle 10.

The front seat 14 is a seat in a front row out of two rows of seats provided in the passenger compartment 62 and includes a driver's seat and a front passenger's seat. A floor face 70 of the vehicle rises just below the front seat 14, and the front seat 14 is located on the rise or a step plane 71. A space formed between the step plane 71 and a reference plane 74 for setting of the ground clearance defines a lower space 63 of the front seat 14. The secondary battery 40 is placed in the lower space 63. The rear seat 16 is a bench seat in a rear row out of the two rows of seats. The floor face 70 of the vehicle also rises just below the rear seat 16, and the rear seat 16 is located on the rise or a step plane 72. A space formed between the step plane 72 and the reference plane 74 defines a lower space 64 of the rear seat 16. The hydrogen tanks 21 are placed in the lower space 64. In the structure of this embodiment, a partition 73 for a trunk space 65 is extended from the step plane 72. A space defined by the partition 73 and the reference plane 74 is included in the lower space 64 of the rear seat 16.

The fuel cells 20 are placed in the front vehicle chamber 61 to be partly extended to the inter-motor space S as shown in Figs. 1 and 2. The fuel cells 20 are known polymer electrolyte fuel cells and form a stack structure including a large number of unit cells to function as a high-voltage power source (several hundred volts). As shown in Fig. 3, in each unit cell of the fuel cells 20, an anode receives a supply of hydrogen gas (fuel gas), which is fed from the hydrogen tank 21, goes through a mass flow controller 22 for pressure and flow rate control, and is humidified by a humidifier 23, while a cathode receives a supply of pressure-regulated, compressed air (oxidizing gas) from an air compressor 13. The fuel cells 20 produce an electromotive force through electrochemical reaction of the hydrogen gas with the compressed air. Hydrogen is separated into proton and electron at the anode. The proton separated at the anode is transmitted through a polymer electrolyte membrane and reaches the cathode, while the electron separated at the anode runs through a connected electric circuit via a load and also reaches the cathode. Oxygen included in the compressed air reacts with the proton and the electron to produce water at the cathode. This electrochemical reaction generates an electromotive force.

Auxiliary machinery of the fuel cells 20 include the air compressor 13, the hydrogen tanks 21, the mass flow controller 22, the humidifier 23, a DC/DC converter 24 actuated to lower the output voltage of the fuel cells 20 or the secondary battery 40 to a preset voltage level, a hydrogen gas circulation pump 25 driven to recirculate non-reacted hydrogen gas exhaust, which is discharged from the fuel cells 20, to the fuel cells 20, a water pump 26 used to circulate a flow of cooling water through the fuel cells 20 for cooling the fuel cells 20 down, the distributor 27 used to distribute the outputs of the fuel cells 20 and the secondary battery 40, and a radiator 32 used to remove heat from the cooling water circulated through the fuel cells 20 by the water pump 26. The distributor 27 is a switching circuit to give a power supply from either one or both of the fuel cells 20 and the secondary battery 40 to the respective wheel motors 11 and 12 and to charge the secondary battery 40 with electric power of the fuel cells 20.

The electric power output from the fuel cells 20 and/or the secondary battery 40 is transmitted via the distributor 27 to the DC/DC converter 24 for voltage drop to a preset level and is supplied to the air compressor 13, the mass flow controller 22, the humidifier 23, the hydrogen gas circulation pump 25, the water pump 26, and a cooling fan of the radiator 32 among the auxiliary machinery. The air compressor 13, the mass flow controller 22, the humidifier 23, the DC/DC converter 24, the hydrogen gas circulation pump 25, the water pump 26, the distributor 27, and the radiator 32 among the auxiliary machinery are placed in the front vehicle chamber 61 with the fuel cells 20 located therein. The air compressor 13 is arranged to be partly extended to the inter-motor space S.

The secondary battery 40 includes plurality of known nickel metal hydride cells connected in series to function as a high-voltage power source (several hundred volts). The secondary battery 40 under control of the PCU 50 drives the respective wheel motors 11 and 12 at a start of the vehicle, recovers a regenerative electric power in decelerating regenerative control, assists the wheels motors 11 and 12 in acceleration, and is charged according to the loading state by the fuel cells 20. The secondary battery 40 is not restricted to the nickel metal hydride battery but may be any chargeable and dischargeable battery, for example, a nickel cadmium battery, a lithium metal hydride battery, or a lead-acid battery. The secondary battery 40 may be replaced by a capacitor.

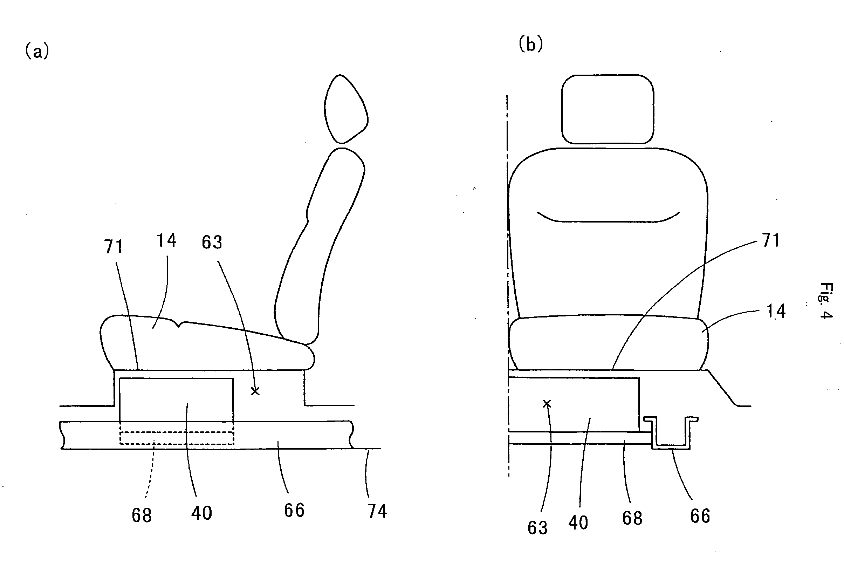

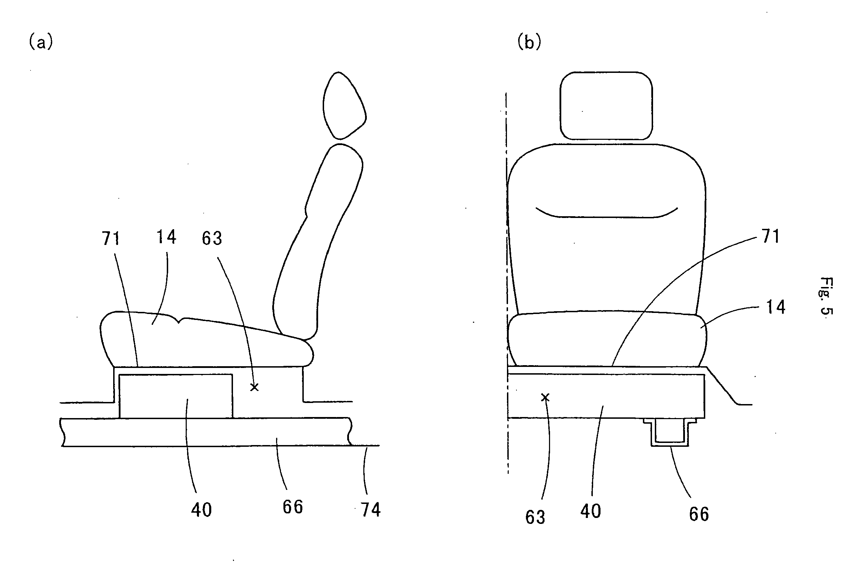

The secondary battery 40 is positioned by a pair of underfloor reinforcements 66 and 67, which are extended on left and right sides of the vehicle in a longitudinal direction of the vehicle, in the lower space 63 of the front seat 14 and is oriented to have its longitudinal axis parallel to the side-to-side horizontal direction of the vehicle. The underfloor reinforcements 66 and 67 are members of the monocoque chassis construction of the fuel cell vehicle 10. In the structure of this embodiment, the height of the secondary battery 40 is greater than the interval between the underfloor reinforcements 66 and 67 and the step plane 71 of the front seat 14. A bridge member 68 is thus provided to bridge the lower portions of the pair of the underfloor reinforcements 66 and 67 as shown in Fig. 4. The secondary battery 40 is fastened onto the bridge member 68. Fig. 4 (a) is a side view in the vicinity of the front seat 14, and Fig. 4 (b) is its front view. In the case where the whole secondary battery 40 is receivable in the interval between the underfloor reinforcements 66 and 67 and the step plane 71 of the front seat 14, the secondary battery 40 is fastened to be spanned between the pair of underfloor reinforcements 66 and 67, as shown in Fig. 5. Fig. 5 (a) is a side view in the vicinity of the front seat 14, and Fig. 5(b) is its front view. The secondary battery 40 is located outside the passenger compartment (below the floor of the vehicle) in the examples of Figs. 4 and 5. The secondary battery 40 may alternatively be located inside the passenger compartment (above the floor of the vehicle). In one modified structure, the secondary battery 40 may be located in a recess of a floor panel, which is formed below the front seat 14 and is covered with a hat-like lid including the step plane 71.

The PCU 50 functions to control the driving forces of the left wheel motor 11 and the right wheel motor 12 and is constructed as a microcomputer-based logic circuit of a known structure (not shown) including a CPU, a ROM, a RAM, and input/output ports. The PCU 50 is located above the front vehicle chamber 61. The PCU 50 receives inputs of an accelerator opening from an accelerator pedal position sensor (not shown), output current and voltage levels of the inverters 11a and 12a, an SOC (state of charge) of the secondary battery 40, and measurements of diverse sensors (not shown), and outputs control signals based on these inputs to the mass flow controller 22 and the air compressor 13 for regulation of the gas supply flows and to the inverters 11a and 12a and the distributor 27.

In the fuel cell vehicle 10 of this embodiment constructed as discussed above, the left wheel motor 11 and the right wheel motor 12 are provided respectively as the in-wheel motors to rotate the left front wheel FLW and the right front wheel FRW. Compared with a common motor used to rotate both the left front wheel FLW and the right front wheel FRW, the wheel motors 11 and 12 have smaller dimensions to define a relatively large space as the inter-motor space S in the front vehicle chamber 61. The fuel cells 20 are placed with some margins in this inter-motor space S.

The fuel cells 20 are located on the front side of the vehicle to be readily replaced and repaired through a hood.

Among the auxiliary machinery of the fuel cells 20, the air compressor 13 (the oxidizing gas supply device), the mass flow controller 22, the hydrogen gas circulation pump 25 (the fuel gas circulation device), the water pump 26 (the cooling water circulation device), the distributor 27, and the radiator 32 are located in the front vehicle chamber 61 with the fuel cells 20 placed therein. This arrangement desirably simplifies the wiring and piping connections with the fuel cells 20, compared with separate arrangement of these auxiliary machines from the fuel cells.

The lower space 63 of the front seat 14 is effectively used to locate the secondary battery 40. The secondary battery 40 is positioned by the underfloor reinforcements 66 and 67, which are extended in the longitudinal direction of the vehicle, and is oriented to have its longitudinal axis parallel to the side-to-side horizontal direction of the vehicle. This arrangement desirably reduces the number of fixtures to fasten the secondary battery 40 and enhances the rigidity of the vehicle against side collisions. The secondary battery 40 may be located in a vehicle chamber to be protected from dust.

The lower space 64 of the rear seat 16 (including the lower space under the partition 73 of the trunk space 65) is effectively used to locate the hydrogen tanks 21. The fuel cells 20, the secondary battery 40, and the hydrogen tanks 21 are thus arranged in this order via sufficient intervals from the front to the rear of the vehicle. The fuel cells 20 and the secondary battery 40 of the high-voltage power source system are desirably separated from the hydrogen tanks 21.

The embodiment discussed above is to be considered in all aspects as illustrative and not restrictive. There may be many other modifications, changes, and alterations without departing from the scope or spirit of the main characteristics of the present invention.

For example, the fuel cell vehicle of the embodiment has the two rows of seats in the passenger compartment 62 aligned in the longitudinal axis of the vehicle. Three or a greater number of rows of seats may be provided in the passenger compartment of the vehicle. For example, in a vehicle with three rows of seats, when a seat in the front row is defined as the front seat, a seat in either the middle row or the rear row is set to the rear seat. When the seat in the middle row is defined as the front seat, on the other hand, the seat in the rear row is set to the rear seat. In another vehicle with only one row of seat in the passenger compartment 62, the secondary battery 40 may be placed in a lower space of the seat, while the hydrogen tanks 21 may be placed in the lower space under the partition 72 of the trunk space 65.

In the fuel cell vehicle of the embodiment, the hydrogen tanks 21 are used as the source of the hydrogen gas (fuel gas) supplied to the fuel cells 20. The hydrogen tanks 21 may be replaced by a hydrogen storage alloy or by a reformer that produces hydrogen-rich gas through reaction of a hydrocarbon fuel (for example, gasoline or methanol) with water.

The above embodiment regards the front-wheel drive vehicle. The principle of the invention is also applicable to a rear-wheel drive vehicle or to a four-wheel drive vehicle. In the rear-wheel drive vehicle, in-wheel motors are provided to respectively rotate a left rear wheel and a right rear wheel, and the fuel cells 20 are placed in a space formed between the two in-wheel motors (inter-motor space). In the four-wheel drive vehicle, the fuel cells 20 may be arranged in an inter-motor space on either the front wheels or the rear wheels.

In the fuel cell vehicle of the embodiment, the fuel cells 20 are arranged to be partly extended to the inter-motor space S in the front vehicle chamber 61. The fuel cells 20 may be arranged to be wholly received in the inter-motor space S.

In the fuel cell vehicle of the embodiment, both the fuel cells 20 and the secondary battery 40 are used as the available power source of the respective wheel motors 11 and 12. (In this structure, the control may give the power supply from both of the fuel cells 20 and the secondary battery 40 to the wheel motors 11 and 12 or may give the power supply from only one of the fuel cells 20 and the secondary battery 40 to the wheel motors 11 and 12). In one possible modification, only one of the fuel cells 20 and the secondary battery 40 may be used as the available power source of the wheel motors 11 and 12. For example, one of the fuel cells 20 and the secondary battery 40 is used as the power source of the wheel motors 11 and 12, while the other is used as the power source of other equipment (for example, auxiliary machinery). Another modified structure has another power source for the wheel motors 11 and 12 in addition to the fuel cells 20 and the battery 40, and uses both or either one of the fuel cells 20 and the battery 40 to assist the additional power source. The wheel motors 11 and 12 are structured to use at least one of the fuel cells 20 and the secondary battery 40 as the available power source.

In the fuel cell vehicle of the embodiment, the left wheel motor 11 and the right wheel motor 12 are respectively provided as the in-wheel motors attached to the left front wheel FLW and to the right front wheel FRW. In one modified structure, the fuel cells 20 may be arranged in the front portion of the vehicle, and the left wheel motor 11 and the right wheel motor 12 may be provided as in-wheel motors attached to a left rear wheel and to a right rear wheel. The fuel cells 20 are thus placed with some margins in a sufficiently large space formed between the left front wheel FLW and the right front wheel FRW, since no wheel motors are located in this space.

### Industrial Applicability

The technique of the invention is applicable to automobile industries.

## Claims

1. A fuel cell vehicle, comprising:
fuel cells that are located in a front vehicle chamber;
a secondary battery that is located in a lower space under a front seat in a passenger compartment of said fuel cell vehicle; and
a fuel gas supply source that is located in a lower space under a rear seat in the passenger compartment and supplies a fuel gas to the fuel cells.

2. A fuel cell vehicle, comprising:
fuel cells that are located in a front vehicle chamber;
an accumulator that is located in a lower space under a front seat in a passenger
compartment of said fuel cell vehicle; and
a fuel gas supply source that is located in a lower space under a rear seat in the passenger compartment and supplies a fuel gas to the fuel cells.

3. A fuel cell vehicle in accordance with either one of claims 1 and 2, wherein at least part of auxiliary machinery of the fuel cells is placed in a neighborhood of the fuel cells.

4. A fuel cell vehicle in accordance with claim 1, wherein the secondary battery is located in a lower space of a seat in the passenger compartment.

5. A fuel cell vehicle in accordance with claim 2, wherein the accumulator is located in a lower space of a seat in the passenger compartment.

6. A fuel cell vehicle, comprising:
a left wheel motor and a right wheel motor that are located respectively close to at least one of left wheels and close to at least one of right wheels on a front side and
a rear side of said fuel cell vehicle; and
fuel cells that are placed in a space formed between the left and right wheels on either of the front side and the rear side of said fuel cell vehicle.

7. A fuel cell vehicle in accordance with claim 6, wherein the fuel cells are placed in an inter-motor space formed between the left wheel motor and the right wheel motor.

8. A fuel cell vehicle in accordance with either one of claims 6 and 7, wherein the fuel cells are placed on the front side of said fuel cell vehicle.

9. A fuel cell vehicle in accordance with any one of claims 6 through 8, wherein the left wheel motor and the right wheel motor are both in-wheel motors.

10. A fuel cell vehicle in accordance with any one of claims 6 through 9, wherein at least part of auxiliary machinery of the fuel cells is placed in a neighborhood of the fuel cells.

11. A fuel cell vehicle in accordance with any one of claims 6 through 10, said fuel cell vehicle further comprising:
a secondary battery that is located in a lower space under a seat in a passenger compartment of said fuel cell vehicle.

12. A fuel cell vehicle in accordance with claim 11, wherein the secondary battery is positioned by underfloor reinforcements, which are extended in a longitudinal direction of said fuel cell vehicle, and is oriented to have its longitudinal axis parallel to a side-to-side horizontal direction of said fuel cell vehicle.

13. A fuel cell vehicle in accordance with any one of claims 6 through 10, said fuel cell vehicle further comprising:
an accumulator that is located in a lower space under a seat in a passenger compartment of said fuel cell vehicle.

14. A fuel cell vehicle in accordance with claim 13, wherein the accumulator is positioned by underfloor reinforcements, which are extended in a longitudinal direction of said fuel cell vehicle, and is oriented to have its longitudinal axis parallel to a side-to-side horizontal direction of said fuel cell vehicle.

15. A fuel cell vehicle in accordance with any one of claims 6 through 14, said fuel cell vehicle further comprising:
a fuel gas supply source that is located in a lower space under a seat in a passenger compartment of said fuel cell vehicle and supplies a fuel gas to the fuel cells.
